# FASCICULE DE BREVET EUROPEEN

(11) **EP 1 494 981 B1**
(45) Date de publication et mention de la délivrance du brevet: **02.08.2006**
(21) Numéro de dépôt: 03745838.7
(22) Date de dépôt: 09.04.2003
(51) Int. Cl.: C04B 41/85, C04B 41/89, F16D 69/02, F02K 9/97

(54) **PROTECTION CONTRE L'OXYDATION DE PIECES EN MATERIAU COMPOSITE**
SCHUTZ VON TEILEN AUS VERBUNDMATERIAL GEGEN OXIDATION
PROTECTION AGAINST OXIDATION OF PARTS MADE OF COMPOSITE MATERIAL

(30) Priorité: 09.04.2002 FR 0204410
(43) Date de publication de la demande: 12.01.2005
(73) Titulaire: Snecma Propulsion Solide, 33187 Le Haillan Cedex (FR)
(72) Inventeur: THEBAULT, Jacques, F-33200 Bordeaux Cauderan (FR); DISS, Pascal, F-33185 LE HAILLAN (FR); LAXAGUE, Michel, F-33160 Saint Medard en Jalles (FR); LAVASSERIE, Eric, F-33130 Begles (FR)
(74) Mandataire: Joly, Jean-Jacques
(86) Numéro de dépôt international: PCT/FR2003/001114
(87) Numéro de publication internationale: WO 2003/084899

(56) Documents cités:
- EP-A- 0 550 305
- EP-A- 0 609 160
- US-A- 4 931 413
- US-A- 5 536 574

## Description

### Arrière-plan de l'invention

L'invention concerne l'application d'un revêtement de protection contre l'oxydation sur des pièces en matériaux composites thermostructuraux contenant du carbone ou un autre matériau sensible à l'oxydation à température élevée, tel que le nitrure de bore.

Les matériaux composites thermostructuraux sont caractérisés par leurs propriétés mécaniques qui les rendent aptes à constituer des pièces de structure et par leur capacité à conserver ces propriétés mécaniques à des températures élevées. Ils sont constitués par un renfort fibreux densifié par une matrice en matériau réfractaire qui comble au moins partiellement la porosité du renfort fibreux. Les matériaux constitutifs du renfort fibreux et de la matrice sont typiquement choisis parmi le carbone et les céramiques. Des exemples de matériaux composites thermostructuraux sont les composites carbone/carbone (C/C) et les composites à matrice céramique (CMC) tels que C/SiC (renfort en fibres de carbone et matrice carbure de silicium) ou C/C-SiC (renfort en fibres de carbone et matrice mixte carbone-carbure de silicium), ou encore C/C-SiC-Si (composite C/C siliciuré par réaction avec Si).

Les matériaux composites thermostructuraux contiennent très fréquemment du carbone, que ce soit comme constituant des fibres, constituant au moins partiel de la matrice, ou encore constituant d'une couche d'interphase formée sur les fibres pour assurer une liaison adéquate avec la matrice. Aussi, une protection contre l'oxydation est indispensable pour éviter une rapide détérioration de pièces formées de tels matériaux composites, lorsque ces pièces sont utilisées en atmosphère oxydante à une température supérieure à 350°C. Cela est vrai aussi lorsque du nitrure de bore (BN) est utilisé comme constituant d'interphase entre fibres et matrice céramiques.

Il existe une abondante littérature concernant la formation de revêtements de protection anti-oxydation pour des pièces formées au moins en partie de carbone ou de graphite.

Dans le cas de pièces en matériaux composites thermostructuraux contenant du carbone, notamment de composites C/C, il est connu de former un revêtement de protection au moins en partie par une composition contenant du bore, et plus particulièrement une composition ayant des propriétés auto-cicatrisantes. Par composition auto-cicatrisante, on entend une composition qui, par passage à l'état visqueux à la température d'utilisation des pièces, peut colmater des fissures qui sont susceptibles de se former dans le revêtement de protection. Sinon, en atmosphère oxydante, de telles fissures offriraient un accès à l'oxygène du milieu ambiant pour atteindre le matériau composite et s'infiltrer dans la porosité résiduelle de celui-ci. Des compositions auto-cicatrisantes couramment utilisées sont des verres borés, notamment des verres borosilicates. On pourra se référer par exemple au document US 4 613 522.

Il est connu aussi du document EP 0 609 160 de former un revêtement de protection contre l'oxydation par un mélange de diborure de zirconium ZrB₂, de silice colloïdale SiO₂ et de carbure de silicium SiC. On note que, dans ce document, l'utilisation du diborure de titane TiB₂ est déconseillée.

L'oxyde B₂O₃ est l'élément essentiel des compositions de protection borées. Il a une température de fusion relativement basse (environ 450°C) et mouille bien la surface carbonée à protéger. Toutefois, lorsque la température devient supérieure à 1000°C, B₂O₃ se volatilise et la capacité de protection s'amenuise.

En outre, du fait de sa température de fusion relativement basse, l'oxyde B₂O₃ peut être éliminé de la surface des pièces par soufflage par un courant gazeux parcourant cette surface. De plus, B₂O₃ est hydrophile et forme des hydroxydes de bore qui commencent à se volatiliser à des températures relativement basses (dès 150°C).

Or, il existe un besoin de protection pour des pièces utilisées en environnement humide à haute température.

Il en est ainsi notamment pour des divergents de tuyères de moteurs fusées à hydrogène et oxygène, la vapeur d'eau produite et éjectée à travers la tuyère créant non seulement un environnement humide et oxydant, mais balayant aussi la surface de la paroi interne du divergent.

Il en est ainsi également pour des disques de frein en composite C/C tels qu'utilisés en aéronautique, lorsque l'atterrissage et le roulage au sol se font sur des pistes humides.

On connaît aussi du document EP 0 550 305 un procédé de réalisation d'un revêtement de protection de pièces en matériau composite contenant du carbone offrant une résistance à l'abrasion et au soufflage. Ce procédé comprend la formation, sur les pièces, d'un revêtement contenant un mélange d'une poudre céramique non oxyde (telle qu'une poudre de carbure, nitrure, borure ou siliciure), d'une poudre d'oxyde réfractaire ayant des propriétés cicatrisantes par formation d'un verre (telle qu'une poudre d'un mélange silice-alumine) et un liant constitué par une résine précurseur de céramique (par exemple une résine polycarbosilane, polytitanocarbosilane ou analogue, polysilazane, polyvinylsilane, ou silicone), le précurseur étant ensuite transformé en céramique. Une couche de protection est obtenue avec une phase céramique non oxyde et une phase cicatrisante constituant deux réseaux interpénétrés, et offrant de ce fait la résistance recherchée à l'abrasion et au soufflage.

### Objet et résumé de l'invention

L'invention a pour but de fournir un procédé de protection contre l'oxydation d'une pièce en matériau composite qui présente une efficacité élevée, particulièrement en environnement humide.

Ce but est atteint grâce à un procédé comprenant : l'application sur la pièce d'une composition contenant un mélange d'au moins un borure sous forme de poudre, d'au moins un oxyde réfractaire vitreux sous forme de poudre ayant des propriétés cicatrisantes par formation d'un verre, et d'un liant comprenant une résine précurseur d'une céramique réfractaire ; et la réticulation de la résine,
procédé selon lequel ladite poudre de borure est composée au moins majoritairement de diborure de titane TiB₂, et ladite poudre d'au moins un oxyde réfractaire vitreux comprend majoritairement un mélange borosilicaté.

Par mélange borosilicaté, ou système borosilicate, on entend ici une association d'oxyde de bore et d'oxyde de silicium, c'est-à-dire un système (B₂O₃,SiO₂).

Outre le diborure de titane TiB₂, la poudre de borure peut comporter au moins un autre borure métallique tel que du borure d'aluminium, comme AlB₂ et/ou AlB₁₂ et/ou du borure de silicium comme SiB₄ et/ou SiB₆.

Comme cela ressortira des exemples donnés dans la description qui suit, une telle composition apporte de façon surprenante une protection effective et durable contre l'oxydation, y compris en environnement humide, et ce en dépit de la présence de B₂O₃.

Le liant peut consister en un polymère précurseur de céramique choisi parmi les polycarbosilanes, polytitanocarbosilanes, polysilazanes, polyvinylsilanes et résines silicones. La réticulation de ce polymère est réalisée de préférence à l'air à une température inférieure à 400°C.

Avantageusement, l'on applique sur la pièce une composition formant, après réticulation, une épaisseur comprise entre 200 et 700 µm.

Avantageusement encore, la composition est appliquée sur la pièce en plusieurs couches successives, avec réticulation intermédiaire.

La céramisation (transformation) du précurseur de céramique réfractaire se fait à température élevée. La céramisation peut être réalisée après application de la composition et avant première utilisation de la pièce par un traitement thermique à une température typiquement supérieure à 600°C, en atmosphère neutre. La céramisation peut aussi être réalisée à plus haute température en atmosphère oxydante, de préférence à une température supérieure ou égale à 800°C. La céramisation est alors réalisée pendant une durée plus limitée, par exemple par flash-oxydation dans un four sous air ou par flammage à l'air, ou encore par couplage inductif direct avec un inducteur lorsque la nature et la forme de la pièce le permettent.

En variante, la céramisation peut être réalisée directement lors de la première utilisation de la pièce en service à haute température.

Dans le cas où la pièce à protéger est en composite C/C, l'application de la composition peut être réalisée directement sur la pièce ou après formation d'une sous-couche réfractaire, par exemple en SiC. Une telle sous-couche a pour fonction de former une barrière supplémentaire de protection contre l'oxydation, mais est sujette à fissuration. La sous-couche peut être formée par voie réactive, par exemple avec gaz SiO, par dépôt ou infiltration chimique en phase vapeur ou par céramisation d'un précurseur, ou peut être obtenue par siliciuration du composite C/C par le silicium, donnant une sous-couche de type SiC-Si.

Selon une autre particularité du procédé selon l'invention, celui-ci comprend une étape préalable d'imprégnation de la pièce par une composition contenant au moins un phosphate, par exemple phosphate d'aluminium ou de magnésium, l'imprégnation étant suivie d'un traitement thermique à une température supérieure à 600°C.

Afin de faciliter son application, notamment d'ajuster la viscosité, la composition comprend de préférence un solvant de la résine précurseur de céramique. L'application de la composition peut être réalisée par enduction au pinceau ou pistolettage, puis élimination du solvant par séchage, et réticulation de la résine.

Afin d'augmenter la résistance du revêtement de protection au soufflage, la composition peut comprendre des charges supplémentaires sous forme de fibres courtes, ou whiskers, en matière réfractaire, par exemple en céramique, telle que carbure de silicium ou alumine.

L'invention a aussi pour objet une pièce en matériau composite contenant du carbone munie d'un revêtement de protection tel qu'obtenu par le procédé défini plus haut. Cette pièce peut être une pièce de friction en composite C/C ou un divergent de tuyère de moteur-fusée.

### Brève description des dessins

L'invention sera mieux comprise à la lecture de la description détaillée faite ci-après, à titre indicatif mais non limitatif. Il sera fait référence aux dessins annexés sur lesquels :

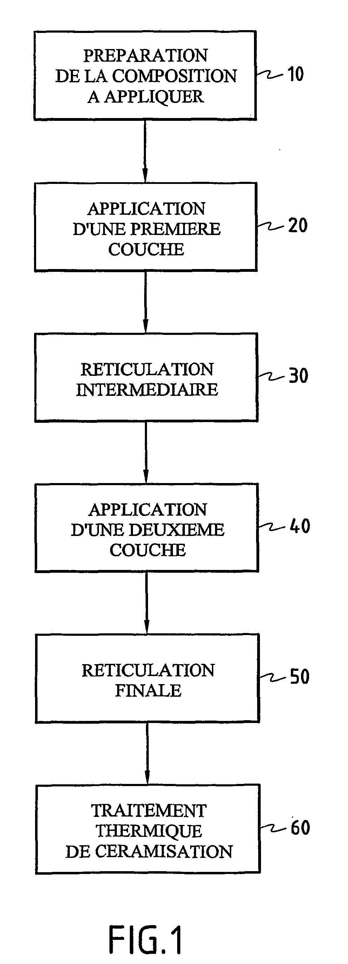

- la Figure 1 montre des étapes successives de formation d'un revêtement de protection contre l'oxydation selon un mode de réalisation de l'invention ; et
- les Figures 2 à 4 montrent des courbes qui illustrent la tenue de revêtements de protection obtenus conformément à l'invention en atmosphère oxydante sèche et humide à des températures de 1000°C ou 1200°C.

### Description détaillée de modes de réalisation

L'invention sera décrite ci-après dans le cadre de son application à la protection contre l'oxydation de pièces en matériau composite C/C, notamment des divergents de tuyères de moteurs fusées et des pièces de friction tels que des disques de frein d'avions.

Toutefois, comme déjà indiqué, l'invention peut être appliquée à tous matériaux composites contenant du carbone, ou autre matériau sensible à l'oxydation, notamment des CMC à renfort fibreux en carbone ou présentant une interphase en carbone ou en nitrure de bore (BN) entre fibres du renfort et matrice céramique, par exemple en SiC.

Une première étape 10 du procédé consiste à préparer la composition à appliquer à la surface de la pièce à protéger.

La composition comporte :
- une poudre de diborure métallique comprenant au moins majoritairement (plus de 50 % en poids) du diborure de titane TiB₂ sous forme finement divisée, auquel peuvent être ajoutés éventuellement un ou plusieurs autres borures tels que du borure d'aluminium AlB₂ et/ou AlB₁₂ et/ou du borure de silicium SiB₄ et/ou SiB₆.
- des oxydes réfractaires sous forme finement divisée (poudre) capables de produire ou formant un verre silicaté auto-cicatrisant aux températures d'utilisation en service envisagées pour la pièce, lesquels oxydes comportent majoritairement de l'oxyde de bore et de l'oxyde de silicium,
- une résine précurseur de céramique réfractaire faisant fonction de liant,
- un solvant de la résine, et
- éventuellement des charges solides sous forme de fibres courtes, ou whiskers, en céramique.

Les constituants du verre de type silicaté, outre les oxydes de bore et de silicium, peuvent être des oxydes permettant de régler la plage de température dans laquelle le verre présente un comportement visqueux utile pour réaliser la fonction de cicatrisation tels que des oxydes d'éléments alcalins : Na₂O, K₂O, des oxydes de baryum BaO ou de calcium CaO ou de magnésium MgO, de l'alumine Al₂O₃, du monoxyde de plomb PbO , un oxyde de fer,...

Ainsi, on pourra utiliser une poudre de verre "PYREX" de la société des Etats-Unis d'Amérique "CORNING" dont la composition est principalement (en pourcentages massiques) :

| | |
|---|---|
| SiO₂ | 80,60% |
| B₂O₃ | 12,60% |
| Na₂O | 4,2% |
| Al₂O₃ | 2,25% |
| Cl | 0,1% |
| CaO | 0,1% |
| | |
| MgO | 0,05% |
| Fe₂O₃ | 0,04% |

D'autres verres sont utilisables qui sont formés majoritairement d'oxydes de bore et de silicium tels que ceux produits par la société allemande "SCHOTT" sous les références "8330", "8337B", "8486" et "88656".

La résine précurseur de céramique réfractaire est choisie par exemple parmi : les polycarbosilanes (PCS), précurseurs du carbure de silicium SiC ; les polytitanocarbosilanes (PTCS) ou autres dérivés dans lesquels le titane a été remplacé par un autre métal (tel que le zirconium), ces produits précurseurs de SiC étant notamment commercialisés par la société japonaise UBE ; ou d'autres précurseurs de systèmes Si-C-O ou SiC-N comme des polysilazanes, des polysiloxanes, des polyvinylsilanes (PVS) ou des résines silicones.

Le solvant de la résine est choisi par exemple parmi le xylène, le toluène, le perchloréthylène, le cyclohexane, l'octane, ....

Les charges supplémentaires éventuelles sous forme de fibres courtes ou whiskers sont par exemple en carbure de silicium SiC, par exemple des fibres commercialisées sous la dénomination "NICALON" par la société japonaise Nippon Carbon, ou en alumine Al₂O₃, par exemple les fibres Al₂O₃ commercialisées par la société britannique ICI sous la dénomination "SAFFIL".

La composition, de préférence après homogénéisation par agitation, est appliquée sur la surface de la pièce à protéger, l'application étant réalisée par exemple par enduction au pinceau ou pistolettage (projection). De préférence, l'application est réalisée en plusieurs couches successives, par exemple en deux couches (étapes 20 et 40) avantageusement séparées par une étape (30) de séchage (élimination du solvant) et de réticulation de la résine.

La quantité totale de composition déposée est de préférence comprise entre 25 mg/cm² et 110 mg/cm², après élimination du solvant par séchage à l'étuve, de manière à obtenir un revêtement, après réticulation, ayant une épaisseur comprise entre 200 µm et 700 µm.

La réticulation de la résine transforme celle-ci en un polymère insoluble qui assure la cohésion des grains de poudre de borure et de verre et des whiskers éventuels et l'accrochage de la couche de revêtement sur la pièce. La réticulation intermédiaire, avant dépôt d'une couche suivante, évite une dissolution de la couche préalablement déposée par le solvant contenu dans la couche déposée ensuite et favorise une bonne homogénéité du revêtement globalement formé.

Une étape de réticulation finale 50 est réalisée après formation et séchage de la dernière couche.

La réticulation de la résine est réalisée à l'air à une température fonction de la nature de celle-ci, de préférence inférieure à 400°C. Dans le cas du PCS, la réticulation peut être réalisée par élévation de la température jusqu'à 350°C à l'air ou en présence d'oxygène.

Un traitement thermique de céramisation du polymère précurseur de céramique réfractaire (transformation du polymère en céramique) peut être réalisé ensuite (étape 60), en élevant la température au-dessus de 600°C, jusqu'à par exemple environ 900°C, sous atmosphère neutre. Le traitement de céramisation peut toutefois être réalisé en atmosphère oxydante, à condition d'être rapide et à température relativement élevée, par exemple supérieure ou égale à 800°C, par exemple par flammage à l'air, ou par flash-oxydation dans un four sous air, ou par chauffage local par couplage inductif avec un inducteur, lorsque la nature et la forme de la pièce le permettent. Le flammage à l'air peut être réalisé au moyen d'un chalumeau, ce qui permet de maîtriser localement la céramisation.

La réalisation de la céramisation avant première utilisation en service de la pièce permet d'obtenir une étanchéification et d'envisager une utilisation à relativement basse température.

Toutefois, ce traitement thermique peut né pas être réalisé avant mise en service de la pièce, la céramisation se produisant alors pendant l'utilisation de la pièce, dès qu'elle est exposée à une température suffisamment élevée.

Après traitement thermique, on obtient une pièce munie d'un revêtement de protection comprenant une céramique réfractaire, issue de la céramisation du précurseur, une phase auto-cicatrisante de type verre silicaté comprenant majoritairement les oxydes B₂O₃ et SiO₂ et une charge formée au moins majoritairement de grains de TiB₂ et éventuellement de whiskers.

Le diborure TiB₂, constitue un régénérateur de B₂O₃. En effet, B₂O₃ ayant tendance à se volatiliser à partir de 400°C-500°C, c'est TiB₂ qui, en s'oxydant à partir de 550°C, vient compenser la disparition de B₂O₃ en engendrant B₂O₃ + TiO₂. L'oxyde TiO₂ est dispersé dans les oxydes du verre silicaté et contribue à en augmenter la viscosité tout en maintenant son pouvoir cicatrisant.

Le ou les borures autres que TiB₂ et présents minoritairement sont par exemple choisis parmi des borures d'aluminium ou de silicium qui permettent de générer B₂O₃, mais aussi un ou des oxydes réfractaires. Lorsque du borure d'aluminium est présent, l'alumine engendrée pendant l'utilisation du produit peut alors réagir avec la silice SiO₂ présente et produire des phases silico-alumineuses, plus réfractaires, par exemple de la mullite (3Al₂O₃,2SiO₂). Outre le renforcement du caractère réfractaire du revêtement formé, cela peut améliorer la tenue de celui-ci au soufflage.

Les charges supplémentaires sous forme de fibres courtes ou whiskers en céramique permettent de retenir le verre lorsqu'il passe dans un état visqueux trop fluide et augmentent donc la résistance du revêtement au soufflage (cas par exemple de divergents de fusée) et à la centrifugation (cas par exemple de disques de frein).

La composition du revêtement final désiré est déterminée par celle de la composition à appliquer sur la pièce, étant noté que la quantité de solvant est ajustée pour conférer la viscosité appropriée pour réaliser l'application au pinceau ou par pistolettage.

Selon une variante du procédé, une étape préalable d'imprégnation d'une pièce à protéger est réalisée avant l'étape 20 afin de former une protection interne contre l'oxydation ancrée dans la porosité de la pièce. L'imprégnation est réalisée par une composition contenant au moins un phosphate, par exemple du phosphate d'aluminium Al(H₂PO₄)₃. Comme décrit dans le document US 5 853 821, cette imprégnation peut être réalisée après un traitement à coeur de la pièce par une solution contenant un agent mouillant puis séchage. Après imprégnation et séchage subséquent, un traitement thermique est effectué en atmosphère neutre. Après application du revêtement de protection conformément à l'invention, on obtient une pièce présentant à la fois une bonne tenue à l'oxydation à température élevée et en atmosphère humide et une bonne tenue à l'oxydation à des températures plus basses, y compris en présence de catalyseurs d'oxydation.

On notera que, selon l'application envisagée, la composition peut être appliquée sur tout ou partie de la surface extérieure d'une pièce. Par exemple, dans le cas de disques de frein, la composition peut être appliquée seulement sur les surfaces autres que la ou les surfaces frottantes et, dans le cas de divergents de tuyères de propulseurs, la composition peut n'être appliquée que sur la surface interne du divergent.

### Exemple 1

Afin de vérifier l'efficacité d'un revêtement de protection selon l'invention, des échantillons de composite C/C ont été munis d'un revêtement de protection dans les conditions suivantes et testés à température élevée (1000°C ou plus) sous air sec et sous air humide.

Les échantillons sont des blocs en composite C/C formé d'un renfort en fibres de carbone densifié par une matrice de carbone pyrolytique obtenue par infiltration chimique en phase gazeuse.

La composition suivante a été réalisée :

| | |
|---|---|
| Poudre de TiB₂ : | 320 g |
| Poudre de verre "PYREX" : | 83,6 g |
| Résine PCS (à l'état sec, solide) : | 100 g |
| Solvant (xylène) : | 150 g. |

Après homogénéisation du mélange, la composition a été appliquée au pinceau sur toute la surface extérieure des échantillons, l'application étant faite en deux couches successives avec séchage intermédiaire et, dans certains cas, avec réticulation intermédiaire du PCS.

Après réticulation finale, les échantillons ont été soumis à un traitement thermique de céramisation du PCS en étant portés jusqu'à une température de 900°C en atmosphère neutre. Le traitement thermique de céramisation du PCS a été réalisé ici préalablement aux essais afin de pouvoir mesurer la masse initiale des substrats après traitement thermique et évaluer la variation de masse après exposition sous atmosphère oxydante. Comme indiqué plus haut, un tel traitement thermique de céramisation n'est pas normalement nécessaire avant utilisation des pièces protégées.

Le tableau I ci-dessous indique, pour différents échantillons, la masse m de composition déposée par unité de surface, ainsi que la variation relative de masse de l'échantillon mesurée après 1 heure d'exposition sous air sec à 1200°C.

**Tableau I**

| Echantillon | m (mg/cm²) | Réticulation intermédiaire | Variation de Masse (%) |
|---|---|---|---|
| A | 33 | non | - 1,6 |
| B | 67 | non | + 1,15 |
| C | 104 | non | + 1,05 |
| D | 29 | oui | + 1 |
| E | 46 | oui | + 1,4 |
| F | 102 | oui | + 1,9 |

On constate que hormis l'échantillon A, on observe une augmentation de masse due à l'oxydation de TiB₂.

Cet essai montre l'intérêt de la réalisation en deux couches avec une réticulation intermédiaire entre les deux couches ainsi que l'influence de l'épaisseur totale du revêtement.

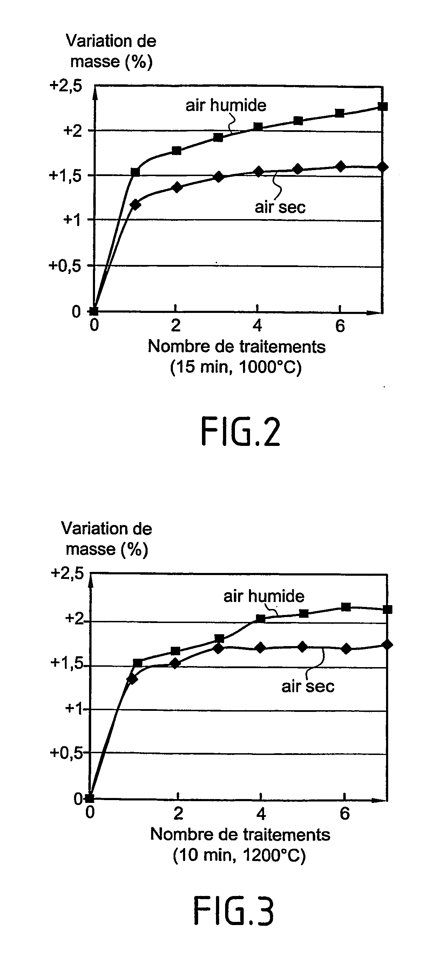

La Figure 2 montre la variation de masse relative mesurée après des expositions successives, chacune d'une durée de 15 min, sous air sec et sous air humide (100 % d'humidité relative à 20°C) à 1000°C pour des échantillons revêtus de deux couches avec réticulation intermédiaire du PCS, tandis que la Figure 3 montre la variation de masse relative mesurée après des expositions successives, chacune d'une durée de 10 min sous air sec et sous air humide à 1200°C, pour des mêmes échantillons.

On ne constate aucune perte de masse, ce qui montre l'exceptionnelle tenue du revêtement en atmosphère humide en dépit de la présence de B₂O₃.

### Exemple 2

Des échantillons en composite C/C identiques à ceux de l'exemple 1 ont été munis d'un revêtement de protection par application d'une couche ou de deux couches (avec dans ce dernier cas séchage et réticulation intermédiaire de la première couche) de la composition suivante :

| | |
|---|---|
| Poudre de TiB₂ : | 80 g |
| Poudre de verre "PYREX" : | 20,9 g |
| Résine silicone : | 31,25 g |
| Solvant (xylène) : | 31,25 g |

A titre d'exemple, la résine silicone utilisée est une résine commercialisée par la société allemande Wacker Chemie sous la référence "H62C".

Après réticulation finale (traitement thermique à 220°C, sans catalyseur), les échantillons ont été soumis à un traitement thermique de céramisation de la silicone en étant portés à 900°C en atmosphère neutre.

Le tableau II ci-dessous indique, pour différents échantillons, le nombre de couches déposées et les variations de masse relatives mesurées Δm/m par rapport à la masse initiale m après céramisation de la silicone, après 20 minutes à 1200°C sous air sec, puis ensuite après 5 heures à 650°C sous air sec et ensuite après encore 5 heures à 650°C sous air sec.

**Tableau II**

| Echantillon | Nombre de couches | 20 min à 1 200°C | 5 h à 650°C | 5 h à 650°C |
|---|---|---|---|---|
| G | 1 | - 0,63 | - 1,96 | - 4,08 |
| H | 2 | + 0,46 | - 0,88 | - 1,08 |

Cet exemple confirme l'efficacité du revêtement, notamment lorsqu'il est formé en deux couches avec réticulation intermédiaire.

### Exemple 3

Des échantillons en composite C/C identiques à ceux de l'exemple 1 ont été munis d'un revêtement de protection par application d'une couche de la composition de l'Exemple 2 (échantillons I et J) ou de deux couches (échantillons K et L), avec dans ce dernier cas séchage et réticulation intermédiaire de la première couche.

Après réticulation finale, les échantillons ont été soumis à un traitement thermique de céramisation de la silicone à 900°C.

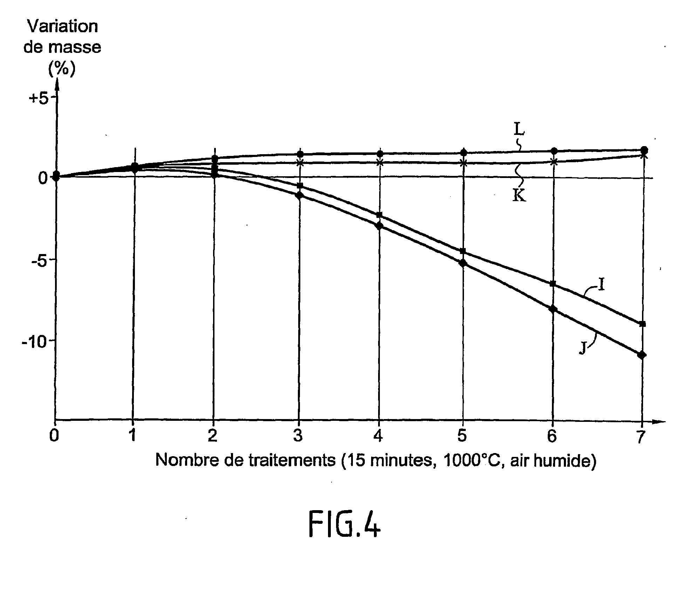

La figure 4 montre la variation de masse relative mesurée par rapport à la masse initiale, après réticulation de la silicone, pour les différents échantillons I, J, K, L exposés pendant des périodes successives de 15 minutes à 1000°C sous air humide (100 % d'humidité relative à 20°C).

On constate encore l'efficacité du revêtement, en particulier lorsqu'il est déposé en deux couches avec réticulation intermédiaire, puisque aucune perte de masse n'est alors observée après 105 minutes.

### Exemple 4

Des échantillons en composite C/C ont été munis d'un revêtement de protection en deux couches réticulées en utilisant la composition de l'exemple 1.

Les échantillons ont été testés dans une installation simulant les conditions de fonctionnement d'un moteur cryotechnique (mélange gazeux 75 % H₂O +25 % H₂ en volume).

Le tableau III ci-après indique les variations de masse relatives mesurées pour différents cycles, l'un ayant été répété.

**Tableau III**

| Cycle | | Variation de masse (%) | | |
|---|---|---|---|---|
| | | 1 cycle | 2 cycles | 3 cycles |
| I. | Température : 1000°C | + 1,8 | | |
| | Pression absolue : 60 mbar | | | |
| | Durée : 640 s | | | |
| II. | Température : 1300°C | + 1,5 | | |
| | Pression absolue : 65 mbar | | | |
| | Durée : 670 s | | | |
| III. | Température : 1400°C | + 1,05 | + 2,08 | + 1,29 |
| | Pression absolue : 210 mbar | | | |
| | Durée : 670 s | | | |
| IV. | Température : 1500°C | -1,18 | | |
| | Pression absolue : 210 mbar | | | |
| | Durée : 670 s | | | |

A titre de comparaison, un cycle I a été réalisé sur un échantillon de composite C/C dépourvu de revêtement de protection. Une variation relative de masse de -1,4 % a été mesurée.

Cet exemple montre l'efficacité à haute température de cette protection dans une ambiance très humide et en présence d'hydrogène H₂.

### Exemple 5

Des mêmes échantillons en composite C/C sont munis de revêtements de protection suivant les trois procédés suivants :
Echantillons M : suivant le procédé de l'exemple 2, avec céramisation finale à 900°C ;
Echantillons N : suivant le procédé de l'exemple 1 du document US 5 853 821 consistant à immerger les échantillons en composite C/C dans un réservoir à agitation par ultrasons contenant une solution à 0,5 % en poids dans l'eau d'un agent mouillant commercialisé sous la dénomination "MARLOPHEN 89" par la société allemande Hüls, puis, après séchage, à appliquer au pinceau une solution de phosphate d'aluminium Al(H₂PO₄)₃ à 50 % en poids dans de l'eau. Après séchage, un traitement thermique est effectué sous azote en élevant progressivement la température jusqu'à 700°C ;
Echantillons O : en appliquant successivement la protection appliquée aux échantillons N selon le brevet US 5 853 821 puis la protection appliquée aux échantillons M conformément à l'invention.

Le tableau IV ci-après donne les pertes de masse relatives mesurées pour différents essais; certains essais étant réalisés en condition d'oxydation catalysée par présence d'acétate de potassium.

**Tableau IV**

| Conditions | Présence d'acétate de K | Echantillons M | Echantillons N | Echantillons O |
|---|---|---|---|---|
| 5 cycles de 5 h à 650°C | non | - 6,9 | - 4,1 | - 2,1 |
| 5 cycles de 5 h à 650°C | oui | - 23,9 | - 3,4 | - 3,3 |
| 5 cycles de 5 h à 650°C | non | - 2,0 | - 11,75 | - 3,4 |
| + 10 min à 1200°C | | | | |
| + 2 cycles de 5 h à 650°C | | | | |
| 5 cycles de 5 h à 650°C | oui | - 47,8 | - 43,20 | -18,0 |
| + 10 min à 1200°C | | | | |
| + 2 cycles de 5 h à 650°C | | | | |

En l'absence d'un traitement final de céramisation type "flash-oxydant" qui réalise une étanchéification, cet essai montre que la protection conforme à l'invention présente une efficacité moindre à relativement basse température, notamment en présence de catalyseur d'oxydation, en comparaison avec la tenue aux températures élevées en atmosphère humide. La protection réalisée selon le brevet US 5 853 821 est par contre efficace à relativement basse température, y compris en présence de catalyseur d'oxydation. Les essais sur les échantillons O montrent l'effet de synergie apporté par l'association des deux types de protection.

## Revendications

1. Procédé de protection contre l'oxydation d'une pièce en matériau composite, comprenant : l'application sur la pièce d'une composition contenant un mélange d'au moins un borure sous forme de poudre, d'au moins un oxyde réfractaire vitreux sous forme de poudre ayant des propriétés cicatrisantes par formation d'un verre, et d'un liant comprenant une résine précurseur d'une céramique réfractaire; et la réticulation de la résine,
**caractérisé en ce que** ladite poudre de borure est constituée majoritairement par du diborure de titane TiB₂, et ladite poudre d'au moins un oxyde réfractaire vitreux comprend majoritairement un mélange borosilicaté.

2. Procédé selon la revendication 1, **caractérisé en ce que** le liant comprend un polymère précurseur de céramique choisi parmi les polycarbosilanes, polytitanocarbosilanes, polysilazanes, polyvinylsilanes et résines silicones.

3. Procédé selon la revendication 2, **caractérisé en ce que** la réticulation est réalisée à une température inférieure à 400°C.

4. Procédé selon l'une quelconque des revendications 1 à 3, **caractérisé en ce que** l'on applique sur la pièce une composition formant, après réticulation, une couche d'épaisseur comprise entre 200 µm et 700 µm.

5. Procédé selon l'une quelconque des revendications 1 à 3, **caractérisé en ce que** la composition est appliquée sur la pièce en plusieurs couches successives, avec réticulation intermédiaire.

6. Procédé selon l'une quelconque des revendications 1 à 5, **caractérisé en ce qu'**il comprend une étape de traitement thermique de céramisation par transformation du précurseur de céramique réfractaire.

7. Procédé selon la revendication 6, **caractérisé en ce que** l'étape de traitement thermique est réalisée à une température supérieure à 600°C, en atmosphère neutre.

8. Procédé selon la revendication 6, **caractérisé en ce que** l'étape de traitement thermique est réalisée à une température supérieure ou égale à 800°C en atmosphère oxydante pendant une durée limitée.

9. Procédé selon la revendication 8, **caractérisé en ce que** le traitement thermique est réalisé par l'un des procédés consistant dans une flash-oxydation dans un four, un flammage à l'air ou un chauffage local par couplage inductif.

10. Procédé selon l'une quelconque des revendications 1 à 9, pour la protection d'une pièce en matériau composite carbone/carbone, **caractérisé en ce que** l'application de la composition est réalisée après formation d'une sous-couche réfractaire.

11. Procédé selon la revendication 10, **caractérisé en ce que** l'on forme une sous-couche réfractaire contenant du carbure de silicium.

12. Procédé selon quelconque des revendications 1 à 11, **caractérisé en ce qu'**il comprend préalablement l'imprégnation de la pièce par une composition contenant au moins un phosphate.

13. Procédé selon l'une quelconque des revendications 1 à 12, **caractérisé en ce que** la composition comprend en outre un solvant de la résine précurseur de céramique, afin d'ajuster la viscosité de la composition.

14. Procédé selon la revendication 13, **caractérisé en ce que** l'application de la composition est réalisée par enduction ou pistolettage, puis élimination du solvant par séchage.

15. Procédé selon l'une quelconque des revendications 1 à 14, **caractérisé en ce que** la composition comprend en outre des fibres courtes en matériau réfractaire.

16. Procédé selon l'une quelconque des revendications 1 à 15, **caractérisé en ce que** ladite poudre de borure comprend en outre au moins un borure choisi parmi les borures d'aluminium et de silicium.

17. Pièce en matériau composite munie d'un revêtement de protection contre l'oxydation comprenant une phase continue de céramique réfractaire, une phase auto-cicatrisante formée d'au moins un oxyde réfractaire et une charge formée d'au moins un borure réfractaire,
**caractérisée en ce que** la phase auto-cicatrisante comprend majoritairement un système borosilicate, et ladite charge est formée majoritairement par du diborure de titane TiB₂.

18. Pièce selon la revendication 17, **caractérisée en ce que** ladite charge comprend en outre au moins un borure choisi parmi les borures d'aluminium et de silicium.

19. Pièce selon l'une quelconque des revendications 17 et 18, **caractérisée en ce que** le revêtement comprend en outre des fibres courtes en matériau réfractaire.

20. Pièce selon l'une quelconque des revendications 17 à 19, **caractérisée en ce qu'**elle est munie d'un revêtement interne de protection contre l'oxydation comprenant au moins au moins un phosphate.

21. Pièce selon l'une quelconque des revendications 17 à 20, constituant une pièce de friction en matériau composite carbone/carbone.

22. Pièce selon la revendication 21, **caractérisée en ce qu'**elle est munie d'un revêtement de protection sur ses surfaces autres que la ou les surfaces frottantes.

23. Pièce selon l'une quelconque des revendications 17 à 20, constituant un divergent de tuyère de moteur fusée dont au moins la surface interne est munie d'un revêtement de protection contre l'oxydation.

## Claims

1. A method of protecting a composite material part against oxidation, the method comprising: applying on the part a composition containing a mixture of at least one boride in powder form, at least one vitreous refractory oxide in powder form having healing properties by forming a glass, and a binder comprising a resin that is a precursor for a refractory ceramic; and curing the resin,
the method being **characterised in that** said boride powder is constituted for the most part by titanium diboride TiB₂, and said powder of at least one vitreous refractory oxide comprises for the most part a borosilicate mixture.

2. A method according to claim 1, **characterised in that** the binder comprises a ceramic precursor polymer selected from: polycarbosilanes, polytitanocarbosilanes, polysilazanes, polyvinylsilanes, and silicone resins.

3. A method according to claim 2, **characterised in that** the curing is performed at a temperature lower than 400°C.

4. A method according to any one of claims 1 to 3, **characterised in that** a composition is applied to the part, which composition, after curing, forms a coat having a thickness lying in the range 200 µm to 700 µm.

5. A method according to any one of claims 1 to 3, **characterised in that** the composition is applied to the part as a plurality of successive coats, with intermediate curing.

6. A method according to any one of claims 1 to 5, **characterised in that** it includes a heat treatment step of ceramization in which the precursor is transformed into a refractory ceramic.

7. A method according to claim 6, **characterised in that** the heat treatment step is performed at a temperature higher than 600°C in an inert atmosphere.

8. A method according to claim 6, **characterised in that** the heat treatment step is performed at a temperature higher than or equal to 800°C in an oxidizing atmosphere for a limited duration.

9. A method according to claim 8, **characterised in that** the heat treatment is performed by one of the methods consisting in: flash oxidation in a furnace, flame treatment in air, and local heating by inductive coupling.

10. A method according to any one of claims 1 to 9, for protecting a carbon/carbon composite material part, the method being **characterised in that** the composition is applied after forming a refractory undercoat.

11. A method according to claim 10, **characterised in that** a refractory undercoat is formed containing silicon carbide.

12. A method according to any one of claims 1 to 11, **characterised in that** it comprises a prior step of impregnating the part with a composition containing at least one phosphate.

13. A method according to any one of claims 1 to 12, **characterised in that** the composition further comprises a solvent for the ceramic-precursor resin, thereby adjusting the viscosity of the composition.

14. A method according to claim 13, **characterised in that** the composition is applied by coating or by spraying, and then eliminating the solvent by drying.

15. A method according to any one of claims 1 to 14, **characterised in that** the composition further includes short fibres of refractory material.

16. A method according to any one of claims 1 to 15, **characterised in that** said boride powder further includes at least one boride selected from borides of aluminium and of silicon.

17. A composite material part provided with a coating for protection against oxidation, the coating comprising a continuous phase of refractory ceramic, a self-healing phase formed of at least one refractory oxide, and a filler formed of at least one refractory boride,
the part being **characterised in that** the self-healing phase comprises for the most part a borosilicate system, and said filler is formed for the most part by titanium diboride TiB₂.

18. A part according to claim 17, **characterised in that** said filler further includes at least one boride selected from the borides of aluminium and of silicon.

19. A part according to claim 17 or claim 18, **characterised in that** the coating further includes short fibres of refractory material.

20. A part according to any one of claims 17 to 19, **characterised in that** it is provided with an internal coating for protection against oxidation, the internal coating comprising at least one phosphate.

21. A part according to any one of claims 17 to 20, constituting a friction piece of carbon/carbon composite material.

22. A part according to claim 21, **characterised in that** it is provided with a protective coating on its surfaces other than its friction surface(s).

23. A part according to any one of claims 17 to 20, constituting a diverging portion for a rocket engine nozzle having at least its inside surface provided with a coating for protection against oxidation.

## Patentansprüche

1. Verfahren zum Schutz gegen Oxidation von einem Teil aus Kompositmaterial umfassend: die Anwendung von einer Zusammensetzung auf das Teil, die ein Gemisch von wenigstens einem Borid in Pulverform, wenigstens ein feuerfestes glasartiges Oxid in Pulverform mit Vernarbungseigenschaften durch Bildung eines Glases und ein Bindemittel enthält, das einen Vorläufer aus einer feuerfesten Keramik umfaßt; und die Vernetzung des Harzes,
**dadurch gekennzeichnet, daß** das Boridpulver mehrheitlich aus Titandiborid TiB₂ besteht und das Pulver von wenigstens einem feuerfesten glasartigen Oxid mehrheitlich ein Borsilikatgemisch umfaßt.

2. Vorrichtung nach Anspruch 1, **dadurch gekennzeichnet, daß** das Bindemittel einen Polymerkeramikvorläufer umfaßt, der unter Polycarbosilanen, Polytitancarbosilanen, Polysilazanen, Polyvinylsilanen und Silikonharzen gewählt ist.

3. Verfahren nach Anspruch 2, **dadurch gekennzeichnet, daß** die Vernetzung bei einer Temperatur unter 400°C durchgeführt wird.

4. Verfahren nach einem der Ansprüche 1 bis 3, **dadurch gekennzeichnet, daß** man auf das Stück eine Zusammensetzung aufträgt, die nach Vernetzung eine Lage mit einer Dicke zwischen 200 µm und 700 µm bildet.

5. Verfahren nach einem der Ansprüche 1 bis 3, **dadurch gekennzeichnet, daß** die Zusammensetzung auf das Teil in mehreren aufeinanderfolgenden Lagen mit Zwischenvernetzung aufgebraucht wird.

6. Verfahren nach einem der Ansprüche 1 bis 5, **dadurch gekennzeichnet, daß** es eine Stufe zur thermischen Behandlung zur Keramisierung durch Umwandlung des feuerfesten keramischen Vorläufers umfaßt.

7. Verfahren nach Anspruch 6, **dadurch gekennzeichnet, daß** die Wärmebehandlungsstufe bei einer Temperatur über 600°C und in neutraler Atmosphäre realisiert wird.

8. Verfahren nach Anspruch 6, **dadurch gekennzeichnet, daß** die thermische Behandlungsstufe bei einer Temperatur über oder gleich 800°C in oxidierender Atmosphäre für eine begrenzte Zeitdauer durchgeführt wird.

9. Verfahren nach Anspruch 8, **dadurch gekennzeichnet, daß** die thermische Behandlung durch eines der Verfahren durchgeführt wird, die bestehen in einer Blitzoxidation in einem Ofen, ein Abflammen an der Luft oder einem lokalen Heizen durch Induktivkopplung.

10. Verfahren nach einem der Ansprüche 1 bis 9 zum Schutz eines Teils aus Kohlenstoff-/Kohlenstoffkompositmaterial, **dadurch gekennzeichnet, daß** die Auftragung der Zusammensetzung nach Bildung einer feuerfesten Unterschicht durchgeführt wird.

11. Verfahren nach Anspruch 10, **dadurch gekennzeichnet, daß** man eine feuerfeste Unterschicht bildet, die Siliziumcarbid enthält.

12. Verfahren nach einem der Ansprüche 1 bis 11, **dadurch gekennzeichnet, daß** es vorher die Imprägnierung des Teils durch eine Zusammensetzung umfaßt, die wenigstens ein Phosphat enthält.

13. Verfahren nach einem der Ansprüche 1 bis 12, **dadurch gekennzeichnet, daß** die Zusammensetzung außerdem ein Lösungsmittel des keramischen Vorläuferharzes umfaßt, um die Viskosität der Zusammensetzung einzustellen.

14. Verfahren nach Anspruch 13, **dadurch gekennzeichnet, daß** die Anwendung der Zusammensetzung durch Überzug oder Sprühen und dann Entfernen des Lösungsmittels durch Trocknen durchgeführt wird.

15. Verfahren nach einem der Ansprüche 1 bis 14, **dadurch gekennzeichnet, daß** die Zusammensetzung außerdem kurze Fasern aus feuerfestem Material umfaßt.

16. Verfahren nach einem der Ansprüche 1 bis 15, **dadurch gekennzeichnet, daß** das Boridpulver außerdem wenigstens ein Borid umfaßt, das gewählt ist, unter den Boriden von Aluminium und Silizium.

17. Teil aus Kompositmaterial, versehen mit einer Schutzbeschichtung gegen Oxidation, umfassend eine kontinuierliche Faser aus feuerfester Keramik, eine selbst-narbende Phase, gebildet durch wenigstens ein feuerfestes Oxid und eine Beschickung, die durch wenigstens einen feuerfestes Borid gebildet ist,
**dadurch gekennzeichnet, daß** die selbst-narbende Phase mehrheitlich ein Borosilikatsystem umfaßt und die Beschickung mehrheitlich aus Titandiborid TiB₂ gebildet ist.

18. Teil nach Anspruch 17, **dadurch gekennzeichnet, daß** die Beschickung außerdem wenigstens ein Borid umfaßt, gewählt unter den Boriden von Aluminium und Silizium.

19. Teil nach einem der Ansprüche 17 und 18, **dadurch gekennzeichnet, daß** die Beschichtung weiterhin kurze Fasern aus feuerfestem Material umfaßt.

20. Teil nach einem der Ansprüche 17 bis 18, **dadurch gekennzeichnet, daß** es mit einer inneren Schutzbeschichtung gegen Oxidation versehen ist, die wenigstens ein Phosphat umfaßt.

21. Teil nach einem der Ansprüche 17 bis 20, bestehend aus einem Reibungsteil aus Kohlenstoff-/Kohlenstoffkompositmaterial.

22. Teil nach Anspruch 21, **dadurch gekennzeichnet, daß** es mit einer Schutzbeschichtung auf seinen Oberflächen versehen ist, die von der oder den Reibflächen verschieden sind.

23. Teil nach einem der Ansprüche 17 bis 20, das eine Expansionsdüse eines Raketenmotors bildet, von dem wenigstens die innere Oberfläche mit einer Schutzbeschichtung gegen Oxidation versehen ist.
